# EUROPÄISCHE PATENTSCHRIFT

(11) **EP 1 176 407 B1**
(45) Veröffentlichungstag und Bekanntmachung des Hinweises auf die Patenterteilung: **12.09.2007**
(21) Anmeldenummer: 01117030.5
(22) Anmeldetag: 12.07.2001
(51) Int. Cl.: G01J 5/08

(54) **Vorrichtung und Verfahren zur Infrarot-Temperaturmessung**
Device and method for infrared temperature measurement
Dispositif et méthode pour la mesure de température dans l'infrarouge

(30) Priorität: 27.07.2000 DE 10036720
(43) Veröffentlichungstag der Anmeldung: 30.01.2002
(73) Patentinhaber: Raytek GmbH, 13127 Berlin (DE)
(72) Erfinder: Rostalski, Hans-Jürgen, 13086 Berlin (DE); Klonowski, Uwe, 13088 Berlin (DE); Schmidt, Volker, 12209 Berlin (DE); Kienitz, Ulrich, 16352 Bosdorf (DE)
(74) Vertreter: Rummler, Felix

(56) Entgegenhaltungen:
- EP-A- 0 458 200
- DE-A- 19 528 590
- PATENT ABSTRACTS OF JAPAN vol. 004, no. 062 (P-010), 9. Mai 1980 (1980-05-09) & JP 55 031976 A (MATSUSHITA ELECTRIC IND CO LTD), 6. März 1980 (1980-03-06)

## Beschreibung

Die Erfindung betrifft eine Vorrichtung zur berührungslosen Temperaturmessung an Objekten, wie z. B. ein IR-Temperaturmessgerät, das mit einem Detektor und einer Visiereinrichtung zur Visualisierung des Messfleckes des Detektors auf dem Objekt ausgestattet ist, und Verfahren zur Erzeugung einer visuell erkennbaren Markierung des Messfleckes von IR-Temperaturmessgeräten.

IR-Temperaturmessgeräte dienen der berührungslosen Erfassung der Temperatur des Objekts durch Detektion der vom Objekt ausgehenden Infrarot-(IR)-Strahlung mit einem IR-Detektor. Der Bereich des Objekts, dessen Strahlung vom Detektor erfaßt wird, wird als (Strahlungs-)Messfleck des Temperaturmessgerätes bezeichnet. Für eine genaue Temperaturmessung ist es wichtig, den Ort und die Größe des Messfleckes zu kennen. Diese Eigenschaften sind allgemein vom Messstrahlengang des Detektors und insbesondere von der Ausrichtung des Messgerätes sowie von dem Aufbau des Detektors, den Eigenschaften einer ggf. vorgesehenen IR-Optik und der Messentfernung abhängig. Es sind die verschiedensten Bauformen von Visiereinrichtungen zur Messfleckvisualisierung bekannt, die sämtlich auf der Erzeugung einer sichtbaren Markierung im Innern oder am Rand des Messfleckes basieren.

Die Markierung umfasst beispielsweise mehrere Lichtpunkte (siehe z. B. DE-OS 3213955, JP 62-12848, US-A-5 368 392, DE-OS 196 54 276), die mit Lichtquellen (z. B. Lasern) und angepassten Abbildungsoptiken am Messfeldrand erzeugt werden. Die Erzeugung von Lichtpunkten besitzt den Nachteil, dass die Abbildungsoptiken, ggf. mit Strahlteilern, relativ aufwendig zu justieren sind. Ferner haben Erfahrungen aus der Praxis ergeben, dass beim Bediener des Gerätes eine Unsicherheit entstehen kann, ob durch die Lichtpunkte etwa mehrere Messflecken markiert werden und welche geometrische Form der Messfleck wirklich besitzt.

Es besteht zwar grundsätzlich die Möglichkeit, die Zahl der zur Markierung verwendeten Lichtpunkte zu erhöhen, so dass der Messfleck durch eine Punktlinie umgeben wird. Die Dichte der Lichtpunkte ist aber konstruktionsbedingt begrenzt. Die Abbildungsoptiken bzw. Strahlteiler können nicht beliebig verkleinert werden. Bspw. werden gemäß DE-OS 196 54 276 die Lichtpunkte mit zueinander windschief verlaufenden Laserstrahlen erzeugt, die jeweils mit einem Umlenkprisma in die gewünschte Richtung gelenkt werden. Die Umlenkprismen müssen zur Vermeidung von nicht-stetigen Übergängen, Lichtverlusten und Fehlstrahlen größer als der Durchmesser der Laserstrahlen sein. Entsprechendes gilt auch für die gegenseitigen Abstände der Umlenkprismen. Die Lichtpunkte am Messfleck erhalten damit typischerweise gegenseitige Abstände im cm-Bereich.

Es ist auch bekannt, den Messfleck mit einer Markierung zu visualisieren, die als durchgehende Umrandungslinie oder Ausleuchtung des Messflecks wahrnehmbar ist. Bspw. wird eine kontinuierliche Umrandung wahrgenommen, falls ein Laserstrahl mit einem schnell rotierenden Spiegel um den Messfleck geführt wird (siehe z. B. EP 0 867 699 A2). Bewegliche mechanische Bauteile sind jedoch wegen ihres Energieverbrauches und einer erhöhten Störanfälligkeit, insbesondere in mobilen IR-Temperaturmessgeräten von Nachteil.

Aus US-A-4 494 881 ist eine Visiereinrichtung bekannt, bei der der Messstrahlengang bis zum Messfleck mit einem Kegel sichtbaren Lichtes ausgeleuchtet wird. Bei diesem Gerät gibt es auch Justageprobleme, wenn der Öffnungswinkel des Lichtkegels möglichst genau an den Öffnungswinkel des Detektors angepasst werden soll. Außerdem entstehen wiederum beim Einsatz in der Praxis Unsicherheiten, ob die Ausleuchtung des Messfeldes mit sichtbarem Licht eventuell das Temperaturmessergebnis verfälscht.

Aus EP 0 458 200 A2 (bzw. US-A-5 172 978) ist ein IR-Temperaturmessgerät bekannt, bei dem die Visiereinrichtung koaxial um eine Kombination aus einem Detektor und einer Kondensorlinse angeordnet ist. Mit der Kondensorlinse wird der Detektor fokussiert auf das Objekt abgebildet. Der Messfleck besitzt lediglich die Größe der Sensorfläche des Detektors. Die Visiereinrichtung wird durch mindestens eine Ringlinse gebildet, mit der eine zusätzliche Lichtquelle ebenfalls fokussiert auf das Objekt abgebildet wird. Dieses IR-Temperaturmessgerät besitzt die folgenden Nachteile. Es ist auf Temperaturmessungen mit geringen Objektabständen beschränkt (Nahfokus). Da die Ringlinse ein äußerer Ringausschnitt einer konvexen Linse ist, kann das Licht von der Lichtquelle wie mit einer konvexen Linse nur auf die optische Achse des Detektors abgebildet werden. Falls sich das Objekt vor oder hinter dem Fokus befindet, verbreitert sich die Markierung bis hin zu einer flächigen Beleuchtung. Eine Abbildung der Lichtquelle auf größere Objektentfernungen (oberhalb wenige 10 cm) ist ausgeschlossen.

Aus DE-A-19528590 ist eine Vorrichtung und ein Verfahren gemäß dem Oberbegriff von Anspruch 1 bzw. 7 bekannt.

Die Aufgabe der Erfindung ist es, eine verbesserte Vorrichtung zur berührungslosen Temperaturmessung anzugeben, mit der die Nachteile der herkömmlichen IR-Messgeräte vermieden werden und die insbesondere eine gut wahrnehmbare Messfleckvisualisierung mit hoher Genauigkeit und Reproduzierbarkeit erlaubt, einen erweiterten Einsatzbereich besitzt und einfach justierbar ist. Die Aufgabe der Erfindung ist es auch, ein verbessertes Verfahren zur Messfleckvisualisierung anzugeben.

Diese Aufgaben werden durch eine Vorrichtung und ein Verfahren mit den Merkmalen gemäß Patentanspruch 1 bzw. 7 gelöst. Vorteilhafte Ausführungsformen und Verwendungen der Erfindung ergeben sich aus den abhängigen Ansprüchen.

Die Erfindung umfasst eine Vorrichtung zur berührungslosen Temperaturmessung, die eine Detektoreinrichtung mit einem Detektor und einer IR-Optik, die den Detektor entlang eines Messstrahlengangs mit einer optischen Achse auf einen Messfleck auf dem Objekt abbildet, und eine Visiereinrichtung zur Visualisierung des Messflecks mit einer Lichtquelle zur Erzeugung von Markierungslicht und einer Ringoptik aufweist, die einen Markierungsstrahlengang bildet, der den äußeren Umfang des Messstrahlenganges umgibt, wobei das Markierungslicht so ausgerichtet ist, dass an jedem Ort des Markierungsstrahlenganges dessen zur optischen Achse senkrechter Querschnitt eine Kreisringfläche bildet.

Die verwendete Ringoptik besitzt den Vorteil, dass mit einem einzigen optischen Bauelement in jeder Entfernung zwischen der Meßvorrichtung und dem Objekt eine ringförmige Meßfleckmarkierung erzeugt wird. In einer weiteren Ausgestaltung bildet das Lichtfeld zur Messfleckvisualisierung an jedem Ort des Markierungsstrahlenganges einen Kreisring mit konstanter radialer Breite und ggf. abstands-abhängigem Durchmesser. Das optische Bauelement ist einfach zu justieren und kann in verschiedenen Ausführungsformen für alle interessierenden Betriebsweisen eines IR-Messgerätes, insbesondere für eine Temperaturmessung mit einer ins Endliche oder einer ins Unendliche abbildenden Optik, ausgelegt sein. Die Breite des Kreisringes kann so gering sein wie typische Lichpunktdurchmesser bei herkömmlichen Visiereinrichtungen (z. B. 1 mm), so dass die Markierung unabhängig von der Messentfernung als scharfe Kreislinie wahrgenommen wird.

Die Abbildungsoptik der Visiereinrichtung enthält gemäß der Erfindung mindestens eine Ringlinse, deren Körper auf der zum Objekt weisenden Seite eine Vielzahl von radial ausgerichteten prismatischen Facetten aufweist. Bei dieser Ausführungsform verläuft das Markierungslicht im Markierungsstrahlengang ebenfalls schiefwinklig zur optischen Achse des Detektors. Diese Ringlinse wird hier als Facettenlinse bezeichnet. Die Facetten können eine gekrümmte Oberfläche besitzen, so dass sich die nachfolgend beschriebene Bauform einer Toroidlinse ergibt.

Die Bauform einer solchen Toroidlinse erzeugt einen Markierungsstrahlengang in Form eines geraden, einschaligen Hyperboloids, der in endlichem Abstand von der Messvorrichtung eine Einschnürung oder Taille besitzt. Diese Bauform ist für einen Detektor mit ins Endliche abbildender Optik ausgelegt. Die Taille des Markierungsstrahlenganges besitzt einen Abstand von der Messvorrichtung entsprechend der Lage des Messflecks, auf den der Detektor fokussiert ist. Hierzu besitzt der Körper der Toroidlinse eine abschnittsweise toroidförmige Oberfläche, deren Scheitellinie in mindestens zwei Teilabschnitten jeweils in Bezugsebenen liegen, die gegenüber der optischen Achse des Detektors einen Winkel ungleich 90° bilden. Die Toroidlinse besitzt auf der zum Objekt weisenden Seite eine Oberfläche in Form einer stückweise stetigen Toroidflache mit schraubenförmigem Anstieg. Bei dieser Bauform verläuft das Markierungslicht im Markierungsstrahlengang schiefwinklig zur optischen Achse des Detektors.

Ein besonderer Vorteil der Erfindung besteht darin, dass mit der erfindungsgemäßen Visiereinrichtung mit der Facettenlinse ein koaxiales Lichtbündel erzeugt wird, das sich immer entlang des äußeren Randes des Messstrahlenganges des Detektors ausbreitet. In jeder beliebigen Entfernung und auf jeder beliebigen Projektionsebene wird die Form des Messfleckes mit einer deutlich sichtbaren, kreisringförmigen Linie angezeigt. Der Markierungsstrahlengang besitzt keinen Fokus.

Weitere Vorteile und Einzelheiten der Erfindung werden im Folgenden unter Bezug auf die beigefügten Zeichnungen beschrieben. Es zeigen:
- Figur 1: eine schematische Übersichtsdarstellung einer erfindungsgemäßen Vorrichtung zur berührungslosen Temperaturmessung,
- Figur 2: eine schematische Illustration der Mess- und Markierungsstrahlengänge einer Messvorrichtung (erste Bauform), die zum besseren Verständnis der Erfindung beschrieben wird,
- Figur 3: eine Schnittdarstellung einer Toroidlinse,
- Figur 4: eine schematische Illustration der Mess- und Markierungsstrahlengänge einer weiteren Messvorrichtung (zweite Bauform), die ebenfalls zum besseren Verständnis der Erfindung beschrieben wird,
- Figur 5: eine vergrößerte Darstellung der Toroidlinse, wie sie bei der Messvorrichtung gemäß Figur 4 vorgesehen ist,
- Figur 6: eine schematische Illustration der Mess- und Markierungsstrahlengänge einer Ausführungsform der erfindungsgemäßen Messvorrichtung,
- Figur 7: eine vergrößerte Darstellung der Facettenlinse, wie sie bei der Ausführungsform gemäß Figur 6 vorgesehen
- Figur 8: eine schematische Darstellung der Kreisringfläche des Markierungslichts gemäß einer ersten Variante und
- Figur 9: eine schematische Darstellung der Kreisringfläche des Markierungslichts gemäß einer zweiten Variante.

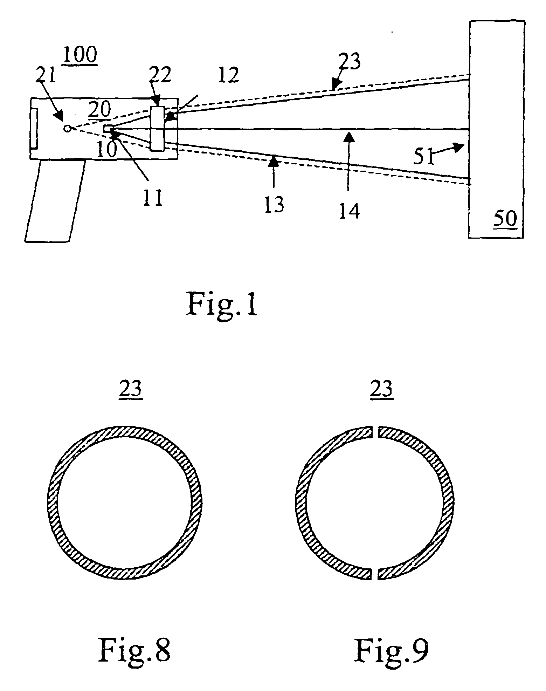

Figur 1 illustriert in schematischer Übersichtsdarstellung eine erfindungsgemäße Vorrichtung zur berührungslosen Temperaturmessung (IR-Messgerät 100) an einem Objekt 50. Der Aufbau von IR-Messgeräten ist an sich bekannt und wird hier lediglich in Bezug auf die Detektor- und Visierkomponenten erläutert. Alle anderen Teile, insbesondere die Steuer- und Auswertungselektronik, Betätigungs- und Anzeigeeinrichtungen und das Gehäuse, können aufgebaut sein, wie es von herkömmlichen IR-Messgeräten bekannt ist. Die Erfindung ist nicht auf einen bestimmten Gerätetyp beschränkt und kann insbesondere mit tragbaren, handgehaltenen oder auch ortsfest montierten Messgeräten realisiert werden.

Das IR-Messgerät 100 enthält eine Detektoreinrichtung 10 und eine Visiereinrichtung 20. Die Detektoreinrichtung 10 umfaßt einen Detektor 11 und eine IR-Optik 12, mit der der Detektor 11 entlang dem Messstrahlengang 13 auf das Objekt 50 abgebildet wird. Der Messstrahlengang 13 ist radialsymmetrisch zur optischen Achse 14. Beim dargestellten Ausführungsbeispiel erfolgt eine Detektion mit einer ins Unendliche abbildenden Optik, d. h. der Messstrahlengang 13 erweitert sich kegelförmig mit zunehmender Entfernung vom IR-Meßgerät 100. Der Messfleck 51 wird dort gebildet, wo der Messstrahlengang 11 auf das Objekt 50 fällt. Der Detektor ist zur Erfassung der IR-Strahlung vom Meßfleck 51 ausgelegt.

Mit der Visiereinrichtung 20 wird entlang dem Markierungsstrahlengang 23 sichtbares Licht zur Markierung des Messfleckes 51 auf das Objekt gerichtet. Die Visiereinrichtung 20 umfasst eine Lichtquelle 21 zur Erzeugung des Markierungslichts und eine Ringoptik 22, deren Einzelheiten unten beschrieben werden. Die Lichtquelle 21 ist vorzugsweise eine Laserquelle, z. B. eine Laserdiode, kann aber auch durch andere Lampenformen oder Leuchtelemente (z. B. das Ende eines Lichtleiters) gebildet werden. Die Mess- und Markierungsstrahlensstrahlengänge 13, 23 haben die gleiche optische Achse 14.

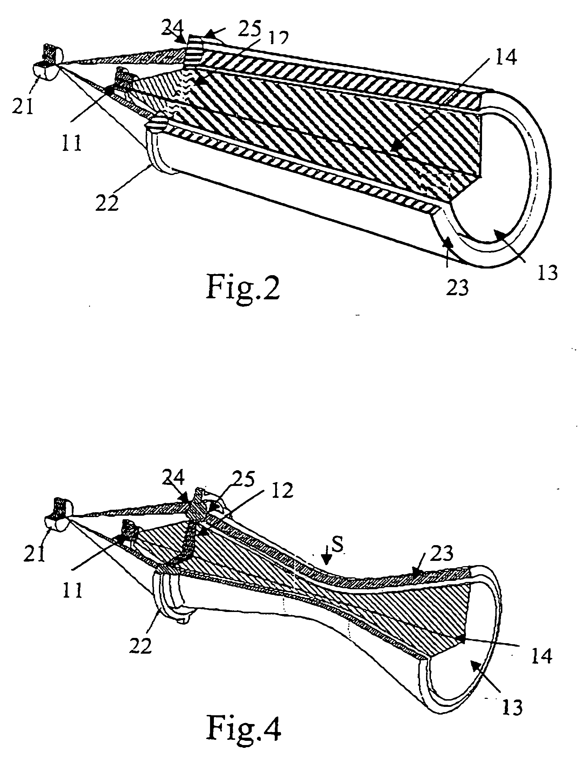

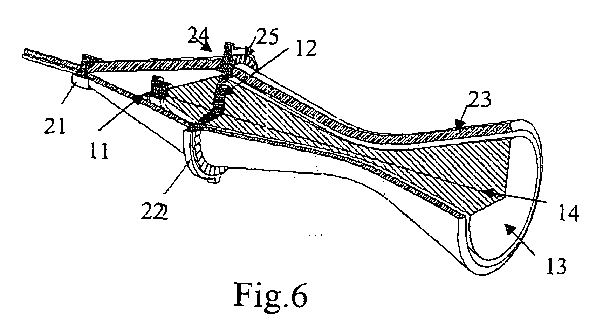

Fig. 2 illustriert das optische System eines IR-Messgerätes in schematischer Perspektivansicht. Mit der IR-Optik 12 wird der Detektor 11 entlang der optischen Achse 14 ins Unendliche abgebildet, so daß der Meßfleck mit zunehmender Entfernung vom IR-Meßgerät immer größer wird.

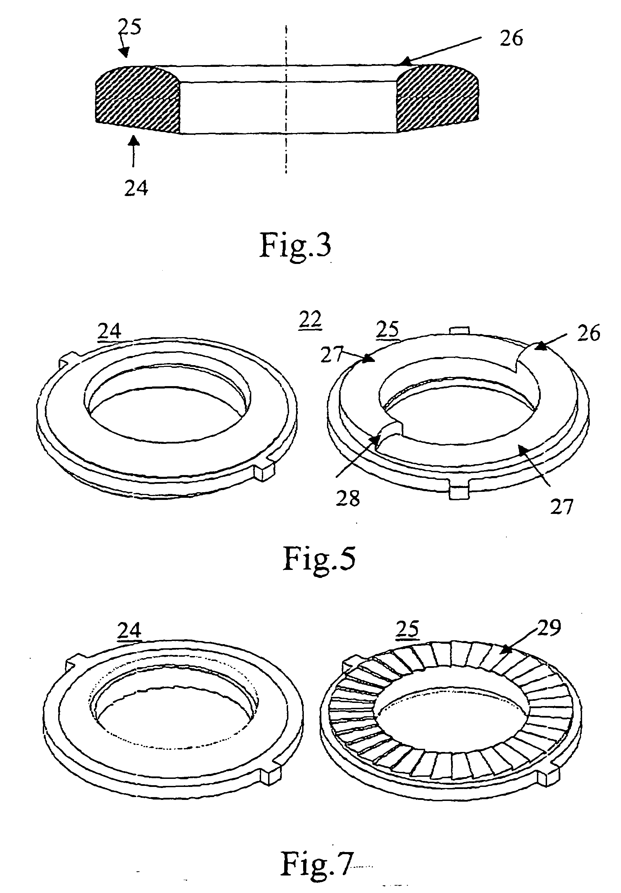

Die Visiereinrichtung 20 umfasst die Lichtquelle 21 und die Toroidlinse 22, mit der der Markierungsstrahlengang 23 gebildet wird. Die Toroidlinse 22 ist eine einstückige Ringlinse mit einer ersten, zur Lichtquelle 21 weisenden Seite (Rückseite 24) und einer zweiten, zum Objekt weisenden Seite (Vorderseite 25). Die Rückseite 24 kann (wie dargestellt) eine ebene oder auch eine kegelförmige Fläche (Fig.3) sein. Die Vorderseite 25 ist toroidförmig gewölbt. Die Scheitellinie (26, siehe Figur 3), d. h. die Linie maximaler Auswölbung der Vorderseite 25 liegt in einer Bezugsebene senkrecht zur optischen Achse. Von der Lichtquelle 21 mit einem bauformabhängigen Öffnungswinkel abgestrahltes Markierungslicht trifft auf die Rückseite 24 der Toroidlinse 22 und wird mit dieser auf den Markierungsstrahlengang 23 als paralleles Strahlenbündel in Form eines hohlen Kreiszylinders gelenkt. Der Innendurchmesser des Kreiszylinders entspricht dem Außendurchmesser des Messstrahlengangs 11, kann aber auch kleiner oder größer als dieser sein. Die Rückseite wird in bevorzugter Weise kegelförmige ausgebildet. Der Kegelwinkel wird so bestimmt, daß damit der durch die Ringbreite erfaßte Anteil des Markierungslichtkegels so abgelenkt wird, daß er danach im wesentlichen symmetrisch zur Scheitellinie der toroidförmigen Vorderseite verläuft. Dadurch wird erreicht, daß die toroidförmige Linsenfläche auf der Vorderseite geringere Abbildungsfehler, die die Markierungsringqualität verschlechtern würden, einführt. Zumindest in einem Hauptschnitt, also einer Schnittebene, welche die optische Achse enthält, treten dann keine außeraxialen Abbildungsfehler auf.

Ist die IR-Optik 12 so ausgebildet, daß sich der Meßfleck 51 am Objekt mit zunehmendem Abstand vergrößert, wird die Toroidlinse 22 so ausgelegt, daß sich der Markierungsstrahlengang 23 als divergierendes Strahlenbündel in Form eines hohlen Kegels ausbildet.

Die Toroidlinse 22 besteht aus Glas oder Kunststoff. Die konkrete geometrische Form der Vorder- und Rückseiten 24, 25 wird anwendungsabhängig gewählt und wird mit den Gesetzen der geometrischen Optik, ggf. unter Verwendung numerischer Optimierungsmethoden, ermittelt. Die Toroidlinse 22 und die IR-Optik 12 werden vorzugsweise wie dargestellt als Verbund hergestellt, können aber auch getrennte Komponenten umfassen.

Typische Maße des Aufbaus gemäß Figur 2 sind beispielsweise: Außendurchmesser der Toroidlinse 22: 34 mm, Innendurchmesser der Toroidlinse 22: 28 mm, Abstand Lichtquelle 21 - Toroidlinse 22: 90 mm, Abstand Detektor 11 - Toroidlinse 22: 60 mm, Öffnungswinkel der Lichtquelle 21: > 21°, Wölbungsradius der Vorderseite 25: 45 mm.

Figur 3 zeigt eine Schnittdarstellung der verwendeten Toroidlinse. Die objektseitige Vorderseite 25 der Toroidlinse besitzt eine gewölbte Oberfläche mit einer Scheitellinie 26 (Linie der maximalen Wölbung in Bezug auf die Ebene der Ringoptik), die einen Abstand vom inneren bzw. äußeren Rand der Ringoptik besitzt. Dadurch wird in jedem Punkt entlang dem Umfang der Ringoptik eine Linse gebildet, die zur Erzeugung eines parallelen Strahlenbündels geeignet ist. Mit einer derartigen Linse ist es möglich, einen Markierungsring zu erzeugen, der in jeder Entfernung vom IR-Meßgerät eine konstante Breite aufweist.

Figur 4 zeigt analog zu Figur 2 das optische System eines IR-Messgerätes gemäß einer abgewandelten Bauform. Die IR-Optik 12 bildet den Detektor 11 entlang der optischen Achse 14 ins Endliche ab, so dass der Messstrahlengang 13 ein einschaliger Hyperboloid ist. Ausgehend von der IR-Optik 12 verkleinert sich das Bild des Detektors 11 bis zu einem Scharfpunktmessfleck S, anschließend wird das Bild des Detektors vergrößert, wie dies mit dem Messstrahlengang 13 illustriert ist. Der Abstand von der IR-Optik 12 zum Scharfpunktmessfleck S beträgt beispielsweise rund 1,15 m. Vor und nach dem Scharfpunktmessfleck S besitzt der Messstrahlengang 13 eine bestimmte Divergenz, die durch die IR-Optik 12 festgelegt ist.

Die Toroidlinse 22 ist dazu ausgelegt, das Licht von der Lichtquelle 21 in den Hyperboloid-förmigen Markierungsstrahlengang 23 zu lenken, der wie der Messstrahlengang keinen Fokus, sondern nur eine engste Einschnürung (Taille) besitzt, die mit dem Scharfpunktmessfleck S zusammenfällt. Der Markierungsstrahlengang 23 wird dadurch gebildet, dass Licht von der Lichtquelle 21 an der Toroidlinse 22 in geraden Bahnen umgelenkt wird, die schiefwinkelig zueinander und zur optischen Achse auf einer Hyperboloid-Oberfläche verlaufen, die den Messstrahlengang 13 umschließt. Hierzu besitzt die Toroidlinse 22 einen nicht-rotationssymmetrischen Linsenkörper, auf dessen Rückseite 24 eine Kegelfläche und auf dessen Vorderseite 25 eine stückweise stetige, schraubenförmige Ringfläche gebildet ist.

Fig. 5 zeigt Einzelheiten dieser Rück- und Vorderseiten 24, 25 der Toroidlinse 22 ohne die IR-Optik. Die Rückseite 24 (linkes Teilbild) besitzt eine Oberfläche wie der äußere Rand einer herkömmlichen Kollimatorlinse oder eine kegelstumpfförmige Oberfläche. Die Vorderseite 25 (rechtes Teilbild) geht aus der Toroidform gemäß- Figur 2 hervor. Die stückweise stetige, schraubenförmige Ringfläche besitzt jeweils in einem Abschnitt 27 die Form eines schiefen Toroids mit einer ansteigenden Scheitellinie 26. Zwischen den Abschnitten 27 ist jeweils eine Unstetigkeit in Form einer Stufe 2 8 vorgesehen. Die Vorderseite 25 kann abweichend von Figur 5 auch in nur einen oder mehr als zwei Abschnitte (z. B. 10 oder mehr) unterteilt sein.

Der Kegelwinkel der Rückseite 24 und der Anstiegswinkel der schraubenförmigen Ringfläche definieren jeweils die Lage bzw. den Durchmesser der Taille des Markierungssstrahlengangs 23. Typische Maße des Aufbaus gemäß Figur 3 sind beispielsweise: Außendurchmesser der Toroidlinse 22: 34 mm, Innendurchmesser der Toroidlinse 22: 28 mm, Abstand Lichtquelle 21 - Toroidlinse 22: 90 mm, Abstand Detektor 11 - Toroidlinse 22: 60 mm, Öffnungswinkel der Lichtquelle 21: > 21°, Wölbungsradius der Vorderseite 25: ca. 4 5 mm, Kegelwinkel der Rückseite 24: 21°, Anstiegswinkel der Ringfläche: ca. 1°.

Die Figuren 6 und 7 zeigen analog zu den Figuren 4 und 5 eine Ausführungsform der Erfindung mit einer Facettenlinse 22, die wiederum zur Bildung eines hyperboloidförmigen Markierungsstrahlenganges 23 ausgelegt ist. Die Vorderseite 25 der Facettenlinse 22 umfasst eine Vielzahl von radial ausgerichteten prismatischen Facetten 29. Die prismatischen Facetten 29 sind Teile von Kreissektoren, die mit einem kleinen Winkelbetrag (Facettenwinkel) um eine achsensenkrechte Gerade verdreht sind. Der Facettenwinkel definiert den Durchmesser der Taille des Markierungsstrahlenganges 23. Typische Maße des Aufbaus gemäß Figur 6 sind beispielsweise: Außendurchmesser der Facettenlinse 22: 34 mm, Innendurchmesser der Facettenlinse 22: 28 mm, Abstand Lichtquelle 21 - Facettenlinse 22: 90 mm, Abstand Detektor 11 - Facettenlinse 22: 60 mm, Öffnungswinkel der Lichtquelle 21: 21°, Kegelwinkel der Rückseite 24: 21°, Facettenwinkel: 1°.

Die Ringoptik 22 (Toroid- oder Facetten-Linse) wird nach einem der folgenden Konzepte beleuchtet. Wird mit der Lichtquelle 21 ein kollimierter Laserstrahl erzeugt, so ist ein optisches Bauteil zur Umwandlung des Laserstrahls in ein Strahlungsfeld mit einer sich kegelförmig aufweitenden Intensitätsverteilung vorgesehen. Das optische Bauteil ist beispielsweise eine Kegellinse (refraktives Axikon, siehe Figur 6, konvex oder konkav). Die Aufweitung des Laserstrahls ist von der Brechzahl, dem Axikonwinkel und der Wellenlänge der einfallenden Strahlung abhängig. Alternativ kann das optische Bauteil auch ein diffraktives Axikon sein, wobei dann die Aufweitung von der radialen Gitterperiode und der Wellenlänge abhängig ist. Wenn eine nicht-kollimierte Strahlungsquelle (z. B. Laserdiode, LED, Faserende) vorgesehen ist, kann es genügen, dass die Rückseite der Ringoptik 22 mit dem an sich aufgeweiteten Strahlungsfeld der Lichtquelle direkt beleuchtet wird (siehe Figuren 2, 4). Falls das Strahlungsfeld nicht rotationssymmetrisch ist, kann der erfindungsgemäß erzeugte Markierungsring eine entsprechende Asymmetrie im Intensitätsverlauf aufweisen.

In dem dargestellten Ausführungsbeispiel wurde die Ringoptik als Ringlinse ausgebildet. Im Rahmen der Erfindung wäre es jedoch auch denkbar, daß das Markierungslicht nicht durch die Ringoptik hindurchtritt, sondern an dieser reflektiert wird. Auch in diesem Fall müßte die Ringoptik so ausgebildet sein, daß das Markierungslicht so ausgerichtet wird, daß an jedem Ort des Markierungsstrahlenganges dessen zur optischen Achse senkrechter Querschnitt eine Kreisringfläche bildet.

In den Fig.8 und 9 sind zwei Beispiele von Kreisringflächen dargestellt. Fig.8 zeigt dabei die Variante eines geschlossenen Kreisrings, wie sie insbesondere bei einer Ringoptik 22 gemäß Fig.2 und Fig.7 entsteht. Fig.9 zeigt eine unterbrochene Kreisringfläche, die beispielsweise durch die Ringoptik gemäß Fig.5 gebildet werden könnte. Die beiden Unterbrechungen ergeben sich durch die beiden Unstetigkeiten zwischen den Abschnitten 27.

Die Kreisringfläche im Sinne der Erfindung kann sowohl durch eine geschlossene, als auch durch eine unterbrochene Kreisringfläche gebildet werden. In einer bevorzugten Ausführungsvariante ist die radiale Breite des Kreisrings für alle Entfernungen von der Meßvorrichtung konstant. Im Rahmen der Ausführungsvariante gemäß Fig.4 wäre es jedoch auch denkbar, daß sich die Breite des Kreisrings bis zum Scharfpunktmeßfleck S etwas verringert und sich dann wieder vergrößert. Auf diese Weise kann bei einer Messung im Scharfpunktmeßfleck der genaue Abstand noch deutlicher visualisiert werden.

Die beschriebene Ausführungsform der Erfindung können wie folgt modifiziert werden. Es kann vorgesehen sein, dass der Detektor nicht koaxial, sondern seitlich mit Abstand von der Visiereinrichtung angeordnet und ein Umlenkspiegel zwischen dem Detektor und der IR-Optik vorgesehen ist.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltung von Bedeutung sein.

## Patentansprüche

1. Vorrichtung (100) zur berührungslosen Temperaturmessung an einem Objekt (50), enthaltend:
- eine Detektoreinrichtung (10) mit einem Detektor (11) und einer IR-Optik (12), die den Detektor (11) entlang eines Messstrahlengangs (13) mit einer optischen Achse (14) auf einen Messfleck (51) auf dem Objekt (50) abbildet, und
- eine Visiereinrichtung (20) zur Visualisierung des Messflecks (51) mit einer Lichtquelle (21) zur Erzeugung von Markierungslicht und einer Ringoptik (22), die einen Markierungsstrahlengang (23) bildet, der den äußeren Umfang des Messstrahlenganges (13) umgibt, wobei das Markierungslicht so ausgerichtet ist, dass an jedem Ort des Markierungsstrahlenganges (23) dessen zur optischen Achse (14) senkrechter Querschnitt.eine Kreisringfläche bildet,
**dadurch gekennzeichnet, dass**
die Ringoptik durch eine Facettenlinse (22) gebildet wird, deren Linsenkörper auf der zum Objekt (50) weisenden Vorderseite (25) eine Vielzahl von radial ausgerichteten prismatischen Facetten (29) aufweist.

2. Vorrichtung gemäß Anspruch 1, bei der das Markierungslicht so ausgerichtet ist, dass die Kreisringfläche an jedem Ort des Markierungsstrahlenganges mit konstanter radialer Breite ausgebildet ist.

3. Vorrichtung gemäß Anspruch 1 oder 2, bei der der Linsenkörper der Ringoptik (22) auf der vom Objekt (50) wegweisenden Rückseite eine kegelstumpfförmige Oberfläche besitzt.

4. Vorrichtung gemäß einem der vorhergehenden Ansprüche, bei der die Lichtquelle durch eine Laserdiode oder eine lichtemittierende Diode oder eine Kombination eines Lasers mit einem Lichtleiter oder einem Axikon gebildet wird.

5. Vorrichtung gemäß einem der vorhergehenden Ansprüche, bei der der Detektor (11) zwischen der Ringoptik (22) und der Lichtquelle (21) positioniert ist und die IR-Optik (12) in der Mitte der Ringoptik (22) vorgesehen ist.

6. Vorrichtung gemäß einem der vorhergehenden Ansprüche, die für einen manuellen, handgehaltenen und handbetätigten Betrieb ausgelegt ist.

7. Verfahren zur Visualisierung des Messflecks eines IR-Temperaturmessgeräts (100) mit einer Visiereinrichtung (20), die eine Lichtquelle (21) und eine Ringoptik (22) aufweist, mit der eine Markierungsbeleuchtung von der Lichtquelle entlang eines Markierungsstrahlengangs auf ein Objekt (50) gerichtet wird, wobei der Markierungsstrahlengang den äußeren Umfang des Messstrahlengangs des IR-Temperaturmessgeräts umgibt, wobei die Markierungsbeleuchtung von der Lichtquelle (21) mit der Ringoptik (22) so gelenkt wird, dass an jedem Ort des Markierungsstrahlenganges dessen zur optischen Achse senkrechter Querschnitt eine Kreisringfläche bildet,
**dadurch gekennzeichnet, dass**
die Ringoptik durch eine Facettenlinse (22) gebildet wird, deren Linsenkörper auf der zum Objekt (50) weisenden Vorderseite (25) eine Vielzahl von radial ausgerichteten prismatischen Facetten (29) aufweist.

## Claims

1. A device (100) for contact-free measurement of the temperature of an object (50), containing:
- a detector device (10) with a detector (11) and an IR optical system (12), which images the detector (11) along a measuring beam path (13) with an optical axis (14) on a measurement spot (51) on the object (50), and
- a sighting device (20) for visualising the measuring spot (51) using a light source (21) to generate a marking light and a ring optical system (22) which forms a marking beam path (23) surrounding the outer circumference of the measuring beam path (13), wherein the marking light is aligned such that at each point on the marking beam path (23), its cross-section perpendicular to the optical axis (14) forms a circular ring area,
**characterised in that**
the ring optical system is formed by a facet lens (22), the body of which has a plurality of radially aligned prismatic facets (29) on the front side (25) facing the object (50).

2. Device in accordance with claim 1, in which the marking light is aligned such that the circular ring area at each point on the marking beam path is formed with a constant radial width.

3. Device according to claim 1 or 2, in which the lens body of the ring optical system (22) has a frustrum-shaped surface on the back side facing away from the object (50).

4. Device in accordance with one of the preceding claims, in which the light source is formed by a laser diode or a light-emitting diode or a combination of a laser and a light conductor or an axicon.

5. Device in accordance with one of the preceding claims, in which the detector (11) is positioned between the ring optical system (22) and the light source (21) and the IR optical system (12) is provided in the middle of the ring optical system (22).

6. Device in accordance with one of the preceding claims, which is designed for manual, hand-held and hand-activated operation.

7. A method of visualising the measuring spot of an IR temperature measuring device (100) with a sighting device (20) which has a light source (21) and a ring optical system (22), with which marking light is directed from the light source along a marking beam path onto an object (50), wherein the marking beam path surrounds the outer circumference of the measuring beam path of the IR temperature measuring device, wherein the marking lighting is directed from the light source (21) with the ring optical system (22) such that at each point on the marking beam path, its cross-section perpendicular to the optical axis forms a circular ring area,
**characterised in that**
the ring optical system is formed by a facet lens (22), the body of which has a plurality of radially aligned prismatic facets (29) on the front side (25) facing the object (50).

## Revendications

1. Dispositif (100) permettant une mesure sans contact de la température d'un objet (50) comprenant :
- un dispositif de détection (10) avec un détecteur (11) et une optique IR (12) qui représente le détecteur 11 le long d'un trajet de rayon de mesure (13) avec un axe optique (14) par un spot de mesure (51) sur l'objet (50) et
- un dispositif de visée (20) permettant de visualiser le spot de mesure (51) avec une source lumineuse (21) permettant de générer une lumière de marquage et une optique annulaire (22) qui forme un trajet de rayon de marquage (23) entourant la périphérie extérieure du trajet de rayon de mesure (13), où la lumière de marquage est orientée de façon à ce que sa section perpendiculaire à l'axe optique (14) forme, à tout endroit du trajet du rayon de marquage (23), une surface en forme de couronne circulaire,
**caractérisé en ce que**
l'optique annulaire est constituée d'une lentille à facettes (22) dont le corps de la lentille comprend, sur la face avant (25) orientée vers l'objet (50), une pluralité de facettes prismatiques (29) orientées de manière radiale.

2. Dispositif selon la revendication 1, dans lequel la lumière de marquage est orientée de façon à ce que la surface en forme de couronne circulaire présente, à tout endroit du trajet du rayon de marquage, une largeur radiale constante.

3. Dispositif selon la revendication 1 ou 2, dans lequel le corps de lentille de l'optique annulaire (22) comprend, sur la face arrière opposée à l'objet (50), une surface de forme tronconique.

4. Dispositif selon l'une des revendications précédentes, dans lequel la source lumineuse est constituée d'une diode laser, d'une diode émettrice de lumière ou d'une combinaison d'un laser avec un conducteur de lumière ou un axicon.

5. Dispositif selon l'une des revendications précédentes, dans lequel le détecteur (11) se trouve entre l'optique annulaire (22) et la source lumineuse (21) et l'optique IR (12) se trouve au centre de l'optique annulaire (22).

6. Dispositif selon l'une des revendications précédentes qui est conçu pour un fonctionnement manuel, portatif et actionné manuellement.

7. Procédé de visualisation du spot de mesure d'un appareil de mesure de température (100) avec un dispositif de visée (20) comprenant une source lumineuse (21) et une optique annulaire (22), avec lequel un éclairage de marquage est orienté par la source lumineuse le long d'un trajet de rayon lumineux sur un objet (50), où le trajet du rayon de marquage entoure la périphérie extérieure du trajet du rayon de mesure de l'appareil de mesure de la température à IR, où l'éclairage de marquage est dirigé par la source lumineuse (21) avec l'optique annulaire (22) de façon à ce que, à tout endroit du trajet du rayon de marquage, sa section perpendiculaire à l'axe optique forme une surface en forme de couronne circulaire,
**caractérisé en ce que**
l'optique annulaire est constituée d'un lentille à facettes (22) dont le corps de la lentille présente, sur la face avant (25) orientée vers l'objet (50), une pluralité de facettes prismatiques (29) orientées de manière radiale.
